# EUROPÄISCHE PATENTSCHRIFT

(11) **EP 0 828 084 B1**
(45) Veröffentlichungstag und Bekanntmachung des Hinweises auf die Patenterteilung: **01.08.2001**
(21) Anmeldenummer: 97114430.8
(22) Anmeldetag: 21.08.1997
(51) Int. Cl.: F16B 19/00, F16B 13/02

(54) **Einschlaghülse oder -dübel**
Drive-in dowell or plug
Cheville à enfoncer

(30) Priorität: 06.09.1996 DE 29615530 U
(43) Veröffentlichungstag der Anmeldung: 11.03.1998
(73) Patentinhaber: BTS Befestigungselemente Technik und Vertrieb GmbH & Co. KG, 45731 Waltrop (DE)
(72) Erfinder: Sawatzki, Günther, D-45731 Waltrop (DE)
(74) Vertreter: Patentanwälte Meinke, Dabringhaus und Partner

(56) Entgegenhaltungen:
- DE-A- 2 536 449
- DE-A- 3 900 985
- DE-A- 4 331 583
- US-A- 5 460 466

## Beschreibung

Die Erfindung richtet sich auf eine Einschlaghülse oder -dübel mit einem Schaft und einem Schlagkopf mit einem in ein Mauerwerk, Bohrloch od. dgl. eintreibbaren Schaftbereich und einen diesen Schaftbereich ggf. überragenden weiteren Schaftbereich.

In der Literatur sind eine Fülle von Einschlagdübeln beschrieben, die häufig die Befestigung eines Flächenelementes auf einem Montageelement, beispielsweise einer Betonwand, zum Inhalt haben. Aus der Fülle der möglichen Literatur seien hier genannt: DE-33 21 625-C2, DE-27 10 967-A1, DE-39 00 985-A1, DE-43 31 583-A1, DE-44 07 349-A1, DE-44 10 793-A1, DE-92 15 458-U1, AT-279 128 und Prospekt: fischer-Betonnagel FBN, Befestigungskatalog 3596 der Fa. fischerwerke GmbH, Waldachtal, 1996, S. 77,143.

Aus der DE-39 00 985-A1 ist ein Einschlagdübel bekannt, der beispielsweise zur Befestigung von Verkleidungen an einer Holzunterlatte gedacht ist. Dabei werden Bohrungen vorgenommen, deren Innenmaß geringfügig kleiner ist als der Außendurchmesser der Einschlagdübel, die, um einen entsprechenden Halt zu gewährleisten, eine durchgängige Längsnut aufweisen, um eine gewisse Verformung quer zur Einschlagrichtung zu ermöglichen.

Eine durchgängige Nut im Einschlagdübel ist nicht immer vorteilhaft, insbesondere dann, wenn der Dübel bestimmungsgemäß mit seinem Kopf einen bestimmten Abstand von der mit der Nut versehenen Oberfläche aufweisen soll, etwa wenn er dazu herangezogen wird, selbst als Befestigungselement zum Aufhängen von Objekten od. dgl. genutzt zu werden. Hierzu war es bisher üblich, Umschlagdübel in Bohrlöchern vollständig zu versenken und dann Nägel einzutreiben oder Schrauben anzuschrauben, deren Köpfe dann einen gewissen Abstand von der Wandoberfläche aufwiesen, um z.B. Schrankelemente aufzuhängen, Spiegel u. dgl. mehr.

Aus der US-5 460 466 ist ein querschnittlich etwa quadratisches Befestigungselement bekannt aus glasfaserverstärktem Nylon, welches in einer Ausführungsvariante zwei parallele Längsschlitze aufweist, die über eine eine Sollbruchstelle bildende Wand in Längsrichtung in Verbindung miteinander stehen, haben, wobei die Wand beim Eintreiben das Befestigungselement aufbricht und ein Auseinanderstreben der dadurch sich bildenden Schenkel ermöglichen soll.

Diese Lösung ist nicht nur aufwendig, sondern kann in vielfacher Weise überall dort nicht eingesetzt werden, wo mit Hilfe von rotierenden Bohrern Löcher in Wände, Decken od. dgl. eingebracht werden.

Aufgabe der Erfindung ist die Schaffung einer Lösung, mit der diese insbesondere im Heimwerkerbereich übliche Befestigungstechnologie durch lediglich einen Einschlagdübel ersetzt werden kann, d.h. zusätzliche Hilfsmittel, wie Nägel oder Schrauben, werden entbehrlich gemacht.

Diese Aufgabe wird mit einer Einschlaghülse mit den Merkmalen des Anspruches 1 gelöst.

Dadurch, daß der Dübel aus einem verstärkten Kunststoffmaterial besteht und nicht durchgängig geschlitzt ist, ist es möglich, ihn zur Befestigung von anderen Objekten zu benutzen, da eine Nut den Aufhängungskomfort nicht stört. Auch wird erreicht, daß der Dübel über den Bereich hinaus, in den er nicht geschlitzt ist, sehr schwer einschlagbar ist, so daß damit eine gewisse Vorgabe der Einschlagtiefe auch für einen Laien gegeben ist.

Die Bestimmung der Einschlagtiefe kann dadurch optisch erleichtert werden, wenn, wie dies die Erfindung ebenfalls vorsieht, im Endbereich des Schlitzes eine Markierungswulst od. dgl. am Schaft vorgesehen ist.

Nicht nur im Heimwerkerbereich, sondern auch im professionellen Bereich gibt es eine Vielzahl von Befestigungssituationen, in denen es gewünscht ist, ein Befestigungselement mit einem Kopf so tief in z.B. ein Mauerwerk einzutreiben, daß der Abstand zwischen Oberfläche Mauerwerk und Innenfläche Kopf einem vorbestimmten Befestigungsmaß entspricht, derart, daß z.B. ein Gehäuse lediglich mit einem Befestigungsschlitz über den Kopf gehoben und nach unten abgesenkt werden muß, so daß der Kopf paßgenau die Rückwand eines Gehäuses hält. Dem trägt die Erfindung sowohl durch die Gestaltung der Einschlaghülse sowie durch eine entsprechende Markierung in dem Bereich des Kopfes Rechnung.

Es hat sich gezeigt, daß es zweckmäßig ist, das dem Hülsenkopf gegenüberliegende freie Ende des Schaftes mit einer Phase ≤ 45° auszurüsten. Kleinere Phasenwinkel, d.h. spitzere Ausbildungen des Einschlagbereiches der Hülse, können zu undefinierten Verformungen führen, so daß ein definiertes Einschlagen der Hülse nicht mehr oder nur schwer möglich ist. Ist hier ein vergleichsweise steiler Winkel, ggf. eine gerade Stirnfläche, der Einschlaghülse vorgesehen, kommen diese undefinierten Verformungen, wie sich gezeigt hat, nicht vor.

Um unterschiedlichen Einsatzzwecken gerecht zu werden, sieht die Erfindung auch vor, daß der Schlagkopf in Aufsicht eine von der Kreisform abweichende Kontur aufweist. So kann beispielsweise der Kopf mit einem das Überhängen von Objekten ermöglichenden Winkelstück versehen sein, der Kopf kann mehr eckig gestaltet sein, um ein definiertes Aufhängen eines Objektes in einer bestimmten Position zu ermöglichen, der Kopf kann ballig oder geringfügig nach innen gewölbt ausgebildet sein u. dgl. mehr.

Da die Schlitzung der Einschlaghülse nicht bis in den Kopfbereich geführt ist, ist es möglich, diesen Kopfbereich mit einer Befestigungsbohrung, z.B. zum Einschrauben eines Hakenelementes od. dgl., zu versehen, wie dies die Erfindung in weiterer Ausgestaltung ebenfalls vorsieht.

Die Erfindung ist nachstehend anhand der Zeichnung beispielsweise näher erläutert. Diese zeigt in
- Fig. 1 und 2: Unteransicht und Seitenansicht zweier unterschiedlich langer Einschlagdübel,
- Fig. 3: die Seitenansicht eines Einschlagdübels mit abgewandeltem Kopf sowie in den
- Fig. 4 und 5: Kopfbereiche von Einschlagdübeln und Seitenansicht und Aufsicht in unterschiedlicher Gestaltung.

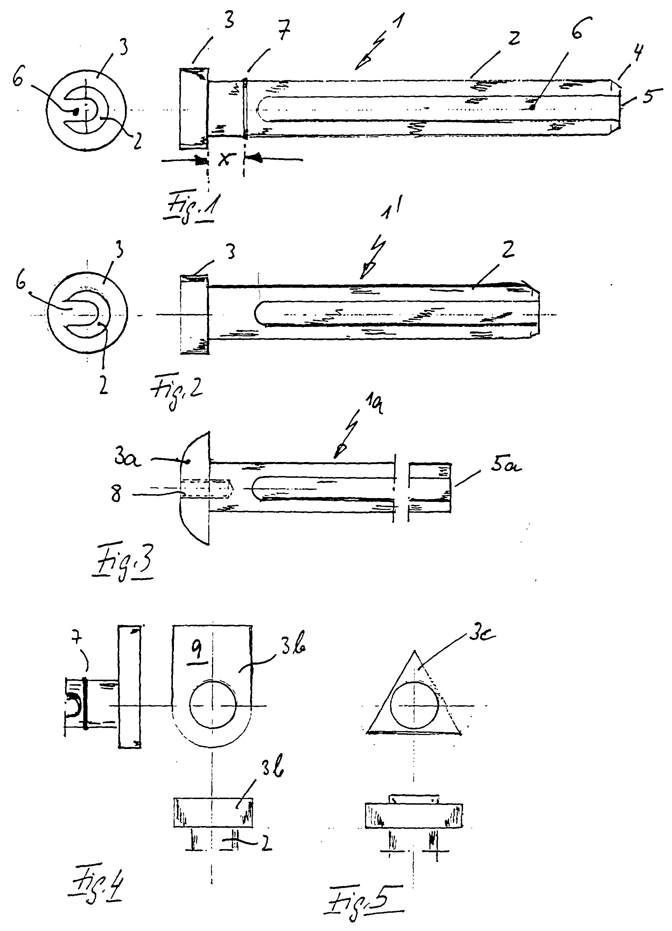

Der in den Figuren allgemein mit 1 bezeichnete Einschlagdübel besteht aus einem beispielsweise glasfaserverstärkten Kunststoffmaterial mit einem Schaft 2 und einem Kopf 3, wobei in dem Schaft 2 in ein in den Fig. 1 und 2 mit einer Phase 4 versehenes Einschlagende 5 eine Nut 6 eingebracht ist, die, wie sich insbesondere aus den Unteransichtdarstellungen der Fig. 1 und 2 ergibt, über die Mittelebene hinaus derart in den Dübelschaft eingebracht ist, daß die Schaftwände etwa durchgehend die gleiche Wandstärke aufweisen.

Die Ausführungsformen der Fig. 1 und 2 unterscheiden sich im wesentlichen in der Länge des Schaftes 2, wobei in Fig. 1 zusätzlich die Möglichkeit dargestellt ist, in den schlitzfreien Schaftbereich unterhalb des Schlagkopfes 3 eine Markierung, z.B. eine Markierungswulst 7, vorzusehen, die es dem Benutzer ermöglichen soll, die genaue Einschlagtiefe des Dübels bestimmen zu können, um beispielsweise einen vordefinierten, in Fig. 1 mit "X" bezeichneten Wandabstand des Kopfes 3 zu gewährleisten.

In Fig. 3 ist eine andere Gestaltung des Kopfes, dort mit 3a bezeichnet, dargestellt, ebenso wie der Einschlagstirnfläche 5a, die beim Ausführungsbeispiel der Fig. 3 völlig phasenfrei gestaltet ist.

Zusätzlich ist in Fig. 3 angedeutet, daß in den schlitzfreien Bereich des Kopfes und des Schaftes von der Kopfseite her z.B. ein zentrisches Innengewinde 8 eingebracht sein kann, um dort Zusatzelemente zu befestigen, z.B. Haken od. dgl., wobei an dieser Stelle bemerkt sei, daß Kopfform und sonstige Elemente sich bei allen Ausführungsbeispielen kombinieren lassen, sie sind also nicht auf die jeweils spezifische Form beschränkt, bei der sie dargestellt sind.

Dies gilt auch für die Kopfformen nach den Fig. 4 und 5. Auch diese könnten beispielsweise zusätzlich mit einem Innengewinde versehen sein. In Fig. 4 ist ein Schlagkopf 3b dargestellt, der einen Fixiersteg aufweist, der beispielsweise als Hakenelement dienen kann, um Gehäuse von Faltkästen od. dgl. überstülpen zu können.

In Fig. 5 ist ein in Aufsicht dreieckiger Schlagkopf 3c dargestellt, um etwa über eine der Spitzen beim Gegenelement eines Spiegelhalters, eines Bildes od. dgl. hängen zu können, um nur einige Anwendungsbeispiele zu erwähnen.

Natürlich sind die beschriebenen Ausführungsbeispiele der Erfindung noch in vielfacher Hinsicht abzuändern, ohne den Grundgedanken zu verlassen. Dies gilt insbesondere für die Schaftlänge, die speziell sich aus der Stärke des Schlitzes ergebene Wandstärke des Schaftes, die Kopfform od. dgl.

## Patentansprüche

1. Einschlaghülse oder -dübel (1) aus einem verstärkten Kunststoffmaterial, insbesondere glasfaserverstärktem Kunststoff mit einem in ein Mauerwerk, Bohrloch od. dgl. eintreibbaren, in diesem Bereich mit einem Längsschlitz (6) versehenen Schaft (2) und mit einem diesen Schaftbereich axial überragenden weiteren nicht geschlitzten Schaftbereich, so daß der Schlitz (6) vor einem Schlagkopf (3) endet, sowie mit einem Schlagkopf (3) , wobei der Längsschlitz (6) im zugeordneten Schaftbereich querschnittlich über den Hülsen- bzw. Dübelmittelpunkt hinaus in das Material einseitig eingebracht ist.

2. Einschlaghülse nach Anspruch 1,
dadurch gekennzeichnet,
daß der Längsschlitz (6) bis unmittelbar vor dem Schlagkopf (3) in den Schaft (2) eingebracht ist.

3. Einschlaghülse nach Anspruch 1 oder 2,
dadurch gekennzeichnet,
daß etwa im Endbereich des Schlitzes (6) eine Markierungswulst (7) od. dgl. am Schaft (2) vorgesehen ist.

4. Einschlaghülse nach einem der vorangehenden Ansprüche,
dadurch gekennzeichnet,
daß das dem Schlagkopf (3) gegenüberliegende freie Ende (5) des Schaftes mit einer Phase ≤ 45° versehen ist.

5. Einschlaghülse nach einem der vorangehenden Ansprüche,
dadurch gekennzeichnet,
daß der Schlagkopf (3) in Aufsicht eine von der Kreisform abweichende Kontur aufweist.

6. Einschlaghülse nach einem der vorangehenden Ansprüche,
dadurch gekennzeichnet,
daß im Schlagkopf (3) eine Befestigungsbohrung (8) für ein Zusatzelement, wie ein Schraubhaken od. dgl., vorgesehen ist.

## Claims

1. Drive-in sleeve or plug (1) made from a reinforced plastics material, more particularly a glass-fibre reinforced plastic, having a shank (2) adapted to be driven into a masonry wall, drilled hole, or the like, and provided in that region with a longitudinal slot (6), and having a further, unslotted shank region which projects axially beyond said first shank region with the result that the slot (6) terminates ahead of an impact head (3), and also featuring an impact head (3), the longitudinal slot (6) being incorporated unilaterally beyond the mid-point of the sleeve or plug cross-sectionally into the material in the associated shank region.

2. Drive-in sleeve according to claim 1,
characterised in that the longitudinal slot (6) is incorporated into the shank (2) until immediately before the impact head (3).

3. Drive-in sleeve according to claim 1 or 2,
characterised in that a marking torus (7) or the like is provided on the shank (2), substantially in the end region of the slot (6).

4. Drive-in sleeve according to any one of the preceding claims,
characterised in that the free end (5) of the shank, situated opposite the impact head (3), is provided with a phase ≤ 45°.

5. Drive-in sleeve according to any one of the preceding claims,
characterised in that seen from above the contour of the impact head (3) is other than circular.

6. Drive-in sleeve according to any one of the preceding claims,
characterised in that provided in the impact head (3) is a fixing bore (8) for an accessory element such as a screw-in hook or the like.

## Revendications

1. Douille ou cheville à enfoncer (1) en matière plastique renforcée, en particulier en matière plastique renforcée de fibres de verre, comportant une tige susceptible d'être enfoncée dans une maçonnerie, un trou ou analogue, pourvue dans cette zone d'une fente longitudinale (6), et une autre zone de tige non fendue dépassant axialement ladite zone de tige, de sorte que la fente (6) se termine en avant d'une tête d'enfoncement (3), ainsi qu'une tête d'enfoncement (3), la fente longitudinale (6) étant ménagée dans la zone de tige associée, vue en section transversale, dans la matière unilatéralement au-delà du centre de la douille ou de la cheville.

2. Cheville à enfoncer selon la revendication 1, caractérisée en ce que la fente longitudinale (6) est ménagée dans la tige (2) jusqu'à une position immédiatement en avant de la tête d'enfoncement (3).

3. Cheville à enfoncer selon l'une ou l'autre des revendications 1 et 2, caractérisée en ce qu'un bourrelet de marquage (7) ou similaire est prévu sur la tige approximativement dans la zone d'extrémité de la fente (6).

4. Cheville à enfoncer selon l'une quelconque des revendications précédentes, caractérisée en ce que l'extrémité libre (5) de la tige opposée à la tête d'enfoncement (3) est pourvue d'un biseau < 45°.

5. Cheville à enfoncer selon l'une quelconque des revendications précédentes, caractérisée en ce que la tête d'enfoncement (3) présente en vue de dessus un contour qui diffère d'une forme circulaire.

6. Cheville à enfoncer selon l'une quelconque des revendications précédentes, caractérisée en ce que dans la tête d'enfoncement (3) est prévu un perçage de fixation (8) pour un élément supplémentaire, tel qu'un crochet à vis ou similaire.
